**Europäisches Patentamt**

**European Patent Office**

**Office européen des brevets**

(11) Veröffentlichungsnummer: **0 150 391**
**A2**

# EUROPÄISCHE PATENTANMELDUNG

(21) Anmeldenummer: 84115349.7

(22) Anmeldetag: **13.12.84**

(51) Int. Cl.⁴: **A 23 K 1/18, A 23 K 1/175**

(30) Priorität: **17.12.83 DE 3345811**

(43) Veröffentlichungstag der Anmeldung: **07.08.85**
**Patentblatt 85/32**

(84) Benannte Vertragsstaaten: **AT BE FR GB IT LU NL**

(71) Anmelder: **Deutsche Perlite GmbH, Kipperstrasse 19, D-4600 Dortmund 1 (DE)**

(72) Erfinder: **Knauf, Albrecht, Dr., Kipperstrasse 19, D-4600 Dortmund 1 (DE)**

(74) Vertreter: **Gosch, Wolf-Dietrich, Rechtsanwälte Dr. Armin Herdt Wolf-Dietrich Gosch Dr. Manfred Georg Bullinger Ballindamm 13, D-2000 Hamburg 1 (DE)**

(54) **Verfahren zur Mast eines Mastschweines.**

(57) Verfahren zur Mast eines Mastschweines, bei dem dem Schwein über eine vorgegebene Mastzeit nach Maßgabe des während der Mastzeit angestrebten Gesamtzuwachses Z in Kilogramm rationenweise eine normierte Schweinefuttermischung in einer Gesamtfuttermenge M in Kilogramm vorgelegt wird, die an der Formel $M = J \times ZN$ orientiert wird. Dabei bezeichnet N diejenige Nutzenergie, die von dem Schwein in 1 Kilogramm Zuwachs umsetzbar ist. J bezeichnet einen Umrechnungsfaktor, der von dem Gehalt an umsetzbarer Energie der Schweinefuttermischung abhängt und die Größe ZN in Kilogramm umrechnet. Der Schweinefuttermischung wird körniger, poröser, «geblähter Perlit oder Vermiculit» oder Mischungen davon beigemischt, und zwar in einer Menge von P Kilogramm entsprechend 0,2 bis 6,0 Gewichtsprozent in der fertigen Schweinefuttermischung. Dem Mastschwein wird zur Erzielung des Gesamtzuwachses Z eine Gesamtfuttermenge vorgelegt, die nach Maßgabe von P auf $M - 2P$ oder weniger reduziert ist.

EP 0 150 391 A2

Rechtsanwälte

# 0150391

## Dr. Armin Herdt
zugelassen bei dem
Hanseatischen Oberlandesgericht, dem Land- und Amtsgericht Hamburg

## Wolf-Dietrich Gosch
zugelassen bei dem
Hanseatischen Oberlandesgericht, dem Land- und Amtsgericht Hamburg

## Dr. Manfred Georg Bullinger
zugelassen bei dem Land- und dem Amtsgericht Hamburg

2000 Hamburg 1
Ballindamm 13
Telefon *040/33 11 47
Telex 2 161 706

Konten:
Deutsche Bank AG (BLZ 200 700 00) 48 72 776
Deutsche Verkehrs-Kredit-Bank AG (BLZ 200 103 00) 10 60 777
Postgiroamt Hamburg (BLZ 200 100 20) 221 984-201
Postgiroamt Hamburg (BLZ 200 100 20) 487 000-205

Rechtsanwälte Dr. Herdt, Gosch, Dr. Bullinger
Ballindamm 13, 2000 Hamburg 1

_ 1 _

Europäische Patentanmeldung
Deutsche Perlite GmbH
Kipperstr. 19
4600 Dortmund 1


## Verfahren zur Mast eines Mastschweines


Die Erfindung betrifft ein Verfahren zur Mast eines Mastschweines, wobei dem Schwein über eine vorgegebene Mastzeit nach Maßgabe des während der Mastzeit angestrebten Gesamtzuwachses Z in Kilogramm rationenweise eine normierte Schweinefuttermischung in einer Gesamtfuttermenge M in Kilogramm vorgelegt wird, die an der Formel $M = J\,ZN$ orientiert wird, wobei N diejenige Nutzenergie bezeichnet, die von dem Schwein in ein Kilogramm Zuwachs umsetzbar ist, J einen Umrechnungsfaktor bezeichnet, der von dem Gehalt an umsetzbarer Energie der Schweinefuttermischung abhängt und die Größe ZN in Kilogramm umrechnet und der Schweinefuttermischung körniger, poröser "geblähter Perlit oder Vermiculit" oder Mischungen davon beigemischt wird und zwar in einer Menge von P Kilogramm, entsprechend 0,2 - 6,0 Gewichtsprozent in der fertigen Schweinefuttermischung. - Zuwachs bezeichnet die Gewichtszunahme des Schweines. Mastzeit bezeichnet zum Beispiel die Zeit der Anfangsmast und/oder die Zeit der Endmast oder eine Summe von beiden. Man kann aber auch eine andere Differenzierung vornehmen. Eine Anfangsmast kann beispielsweise auf einen Zuwachs von 20 Kilogramm auf 45 Kilogramm gerichtet sein, eine Endmast zum Beispiel auf den Zuwachs von 45 Kilogramm auf 100 Kilogramm gerichtet sein.

Ziel der Schweinemast ist bekanntlich die Erzeugung von Fleisch, wobei Fleisch die quergestreifte Muskelfaser der Skelettmuskulatur ist, zuzüglich der daran befindlichen Gewebe, wie zum Beispiel Fett, Bindegewebe, Blut- und Lymphgefäße. Der Anteil an Muskelfasern, Fett und Bindegewebe ist nicht nur bei den einzelnen Teilstücken des Tierkörpers sehr unterschiedlich, er kann auch zwischen den Tieren, vor allem im Fettanteil erheblich schwanken. Das reine Muskelfleisch besteht zu etwa 3/4 aus Wasser, gut 20 % sind Protein, der Rest besteht aus Asche und Fett. Die Proteine sind aus verschiedenen Aminosäuren aufgebaut, deren Art und Reihenfolge im einzelnen Protein genau festgelegt sind. Zur Eiweißbildung ist der Tierkörper auf die Aminosäuren im Futterprotein angewiesen. Bei der Verdauung wird das aufgenommene Futterprotein in seine einzelnen Aminosäuren gespalten und die resorbierten Aminosäuren dienen dem Schwein entweder direkt oder umgebaut zur Bildung von eigenem Körpereiweiß. Einige Aminosäuren, die das Schwein zum Aufbau von Körpereiweiß benötigt, kann es durch Umwandlung von resorbierten Aminosäuren nicht gewinnen, das Schwein muß diese vielmehr direkt aus dem Futterprotein entnehmen. Fehlt einem Mastschwein nur eine dieser lebensnotwendigen, sogenannten essentiellen Aminosäuren, so kann die genetisch festgelegte Reihenfolge der Aminosäuren nicht fortgesetzt werden, und die Proteinbildung unterbleibt, auch wenn Eiweiß reichlich gefüttert worden ist. Normierte Schweinefuttermischungen sind so eingestellt, daß die obigen Zusammenhänge berücksichtigt sind, alle essentiellen Aminosäuren bei ausreichendem Angebot von Protein im Futter vorhanden sind und darüberhinaus auch Kohlehydrate und Fett ausreichend zugemischt sind. Es versteht sich, daß für den Eiweißaufbau auch eine genügende Versorgung mit Mineral- und Wirkstoffen erforderlich ist, mit denen eine normierte Schweinefuttermischung ebenfalls ausgerüstet ist.

Im übrigen besteht eine Abhängigkeit des Zuwachses, anders ausgedrückt des Wachstums der Schweine, von der Energie-, Protein- und essentiellen Aminosäurenversorgung. Versuche haben gezeigt, daß das Proteinbildungsvermögen von der Energieversorgung abhängig ist. Das Proteinbildungsvermögen nimmt mit steigender Energie zu. Die Erfahrung zeigt jedoch, daß eine höhere Proteinsynthese von einer höheren Fettsynthese begleitet ist. Nutzernergie einer Schweinefuttermischung bezeichnet die für das Wachstum nutzbare Energie der von dem Mastschwein aufgenommenen Nährstoffmenge je Kilogramm Zuwachs. Für ihre Ermittlung existieren verschiedene Methoden. Die moderne Praxis arbeitet dabei zumeist mit der sogenannten "Energiezahl für Schweine" EZS (vergl. H. Henkel "Die Fütterung des Mastschweines" in "Betriebswirtschaftliche Mitteilungen", Juni 1981, herausgegeben von der Landwirtschaftskammer Schleswig-Holstein.) Die Energiebewertung von Futtermitteln und Mischungen für die praktische Fütterung von Schweinen setzt eine mittlere Verdaulichkeit des Rohproteins und Rohfettes von etwa 80 % voraus. Die Energiezahl für Schweine je 100 Gramm Futtermittel wird nach folgender Formel berechnet:

EZS = % Rohprotein x 0,8 + % Rohfett x 2 + % Stärke und Zucker.

Das sei am Beispiel von Gerste als einem einfachen, jedoch typischen Futtermittel erläutert:

$$
\begin{array}{rlll}
10 & \% \text{ Rohprotein} & x\ 0,8 = & 8,0 \\
2,7 & \% \text{ Rohfett} & X\ 2,0 = & 5,4 \\
51,9 & \% \text{ Stärke} & x\ 1,0 = & 51,9 \\
2,1 & \% \text{ Zucker} & x\ 1,0 = & 2,1 \\
\hline
& & \text{EZS} = & 67,4
\end{array}
$$

Im praktischen Betrieb muß mit einem bestimmten Energieaufwand je Kilogramm Zuwachs gerechnet werden. Arbeitet man mit der Größe EZS, so gilt die Regel, daß mit einem Energieaufwand von etwa 2.100 EZS-Einheiten je Kilogramm Zuwachs gerechnet werden muß. Selbstverständlich wird es Mastbetriebe geben, deren Schweine mehr oder weniger Energie als hier angenommen wurde, für die gleiche Leistung, nämlich Zuwachs, benötigen. Insoweit sind Korrekturen nach eigenen Erfahrungen eines Schweinemästers unvermeidlich und im Rahmen der Erfindung. Aus all dem resultiert, daß nach der herrschenden Lehre nach Maßgabe der Formel M = J ZN die Gesamtfuttermenge M, die für die Mast eines Mastschweines in einer vorgegebenen Mastzeit benötigt wird, berechnet wird. Insoweit wird im Rahmen der herrschenden Lehre die Formel zu einer Vorschrift.

Da 50 % der Produktionskosten in der Schweinemast die Futterkosten betreffen, werden große Anstrengungen unternommen, den Futterverbrauch zu senken. Als Maßstab für die Wirtschaftlichkeit in der Mast gilt der Begriff der Futterverwertung. Dieser bildet sich aus dem Verhältnis von Gewichtszunahme zu Futterverbrauch. Im Mastabschnitt von 20 bis 100 Kilogramm Lebendgewicht beträgt die durchschnittliche Futterverwertung in der Bundesrepublik Deutschland ca. 1 zu 3,4 (für 1 Kilogramm Zuwachs werden 3,4 Kilogramm Futter benötigt).

Die Futterverwertung wird von der Zusammensetzung des Futters, der Fütterungsmethode, dem Tiermaterial (Rasse), der Tierhaltung, dem Stallklima und den hygienischen Bedingungen stark beeinflußt. Der Begriff "Futterverwertung" gibt deshalb keine Aussage über die Qualität eines Futters wieder. In gut geführten Mastbetrieben wird eine Futterverwertung von 1 zu 3,0 bis 1 zu 3,2 erreicht. Mit der Verbesserung der Futterverwertung verbessert sich auch meistens die tägliche Gewichtszunahme. Die durchschnittliche Gewichtszunahme in der Bundesrepublik Deutschland liegt bei ca. 600 Gramm pro Tag, die der gut geführten Betriebe zwischen ca. 650 und 700 Gramm pro Tag.

In den letzten zwanzig bis dreißig Jahren hat sich das in der Schweinemast eingesetzte Tiermaterial grundlegend geändert. Der Grund hierfür liegt in dem Wunsch des Verbrauchers, ein mageres Schweinefleisch zu erhalten. Früher wurden reinrassige Tiere verwendet. Heute dagegen werden häufig Einfach- und Mehrfachkreuzungen eingesetzt. Durch die Züchtung erhielt man zwar ein mageres Schweinefleisch, jedoch ging gleichzeitig die Futteraufnahme und damit die Produktionsleistung der Tiere zurück. Während die reinrassigen Tiere von 20 bis 100 Kilogramm Lebendgewicht im Durchschnitt 2,4 bis 2,7 Kilogramm pro Tag fressen, beträgt die tägliche Futteraufnahme der heute üblichen Tiere nur noch 2,1 bis 2,3 Kilogramm. Damit besteht das Problem, daß die Tiere nicht genügend Energie aufnehmen, um das angestrebte Wachstum zu erreichen. Die bisherige Lehre geht davon aus, daß eine hohe Produktionsleistung nur dann erzielt wird, wenn die Mastschweine möglichst viel fressen und dabei viel Energie aufnehmen. Aus diesem Grunde wurde von Wissenschaftlern in den letzten Jahren die Lehre verbreitet, daß durch ein energiereicheres Futter, eine bessere Futterverwertung und eine höhere tägliche Gewichtszunahme zu erreichen seien. Anstelle eines Futters mit einer Energie von 63 bis 65 EZS/100 Gramm sollte ein Futter mit 68 bis 72 EZS/100 Gramm verwendet werden. In der Praxis stellte sich jedoch sehr schnell heraus, daß das heutige Tiermaterial aus Einfach- und Mehrfachkreuzungen gesundheitlich nicht in der Lage ist, ein solch energiereiches Futter zu verarbeiten. Die Anfälligkeit der Tiere gegen Krankheiten sowie die Verlustrate sind stark gestiegen. Erfolgreiche Mastbetriebe, die eine Futterverwertung von 1 zu 3,0 bis 1 zu 3,2 haben, arbeiten mit einer Energie von ca. 68 EZS/100 Gramm. Diese benötigen für 80 Kilogramm Zuwachs 240 bis 256 Kilogramm Futter oder 163.200 bis 174.080 EZS. Bezogen auf ein Kilogramm Zuwachs beträgt die Energie 2.040 bis 2.176 EZS. Eine weitere Verbesserung der Futterverwertung oder Senkung des spezifischen Energieverbrauches ist beim heutigen Stand der Erkenntnisse in Praxisbetrieben unter wirtschaftlichen Bedingungen kaum möglich.

Es ist versucht worden, durch Beimengung eines Inertstoffes, wie beispielsweise geblähter Perlit oder geblähter Vermiculit, wie sie in der DE-OS 32 30 129
beschrieben ist, die Futterverwertung zu verbessern,
indem der relative Gehalt an Nährstoffen in dem Futtermittel reduziert wurde. Dabei wurde der Inertstoff
gleichsam als Mittel zur Verdrängung nährstoffhaltiger
Bestandteile in dem Futtermittel verwendet. Selbst
dann, wenn sich die Schweine in der ad libitum-Fütterung sattfressen konnten, stand ihnen lediglich eine
beschränkte Menge an Nährstoffen zur Verfügung. Auch
die Beimengung dieser Inertstoffe bewirkte jedoch keine Verbesserung der Futterverwertung von unter 1 zu
3,0 oder unter 2.000 EZS/Kilogramm Zuwachs. Auch eine
überhöhte Zugabe von Inertstoffen hatte lediglich zur
Folge, daß sich die Futterverwertung eher verschlechterte und sich das tägliche Wachstum verlangsamte.

Aufgabe der vorliegenden Erfingung ist es daher, je
Kilogramm Gewichtszuwachs eines Mastschweines gegenüber
dem Stand der Technik mit noch geringerem Aufwand an
Nutzenergie im Schweinefutter zu arbeiten und die
Kosten für den Futteraufwand weiter zu senken.

Diese Aufgabe wird erfindungsgemäß dadurch gelöst,
daß dem Mastschwein zur Erzielung des Gesamtzuwachses
Z eine Gesamtfuttermenge vorgelegt wird, die nach Maßgabe von P auf zumindest M - 2P reduziert ist. Eine
Absenkung der Gesamtfuttermenge, die dem Mastschwein
während der Mastzeit vorgelegt wird, hat zur Folge,
daß überraschenderweise eine erhebliche Verbesserung
der Futterverwertung und eine Verminderung des spezifischen Energieverbrauches eintritt. Es hat sich als
besonders vorteilhaft erwiesen, den Mastschweinen eine tägliche Futtermenge anzubieten bzw. zuzuteilen, die nur 80 bis 95 % der bisher üblichen Futtermenge entspricht. Da die Mastschweine in der Lage sind, das ihnen angebotene bzw. zugeteilte Futter besser zu verwerten, kann auf die Weise sichergestellt werden, daß dem Schweineorganismus die für ihn jeweils optimale Menge an Nährstoffen zugeführt wird. Dies wirkt sich auch ganz besonders auf die Fleischqualität aus. Diese kann noch erheblich gegenüber dem bisherigen Fütterungsverfahren gesteigert werden. Die Fettsynthese wird weiter vermindert und die Aufnahme eines zu hohen Wasseranteils in das Gewebe wird vermieden. Darüberhinaus führt die Reduzierung der Gesamtfuttermenge zu einer erheblichen Einsparung an Futter. Ferner kann die tägliche Gewichtszunahme eines Mastschweines gesteigert werden. Hierdurch verkürzt sich die Dauer der Mast, so daß die Zahl der Stallbelegungen pro Zeiteinheit beträchtlich erhöht werden kann. Mit anderen Worten: der wirtschaftliche Erfolg der Erfindung besteht nicht nur in einer Verringerung der aufzuwendenden Futtermenge, sondern auch in einer Verkürzung der Mastzeit.

In einem Mastbetrieb wurde ein Mastversuch mit Schweinen der heute üblichen Rasse durchgeführt. Bei diesem Beispiel wurde dem Futtermittel Perlit zugesetzt, wie es in der DE-OS 32 30 129 beschrieben ist und wie es heute handelsüblich ist. Es wurden zwei Mastergebnisse erzielt, die sich dadurch unterschieden, daß die durchschnittliche tägliche Futteraufnahme bei den Schweinen der Kontrollgruppe 2 Kilogramm betrug und bei der Versuchsgruppe die durchschnittliche tägliche Futteraufnahme auf 1,87 Kilogramm gesenkt wurde. Dabei war die Futterzusammensetzung die gleiche.

Zusammensetzung des Futters:

| Gerste | 44,0 % |
|---|---|
| Weizen | 28,4 % |
| Soja | 21,5 % |
| (44 % Rohprotein) | |
| Tierfett | 1,2 % |
| Mineralstoffmischung | 3,1 % |
| Perlit | 1,8 % |
| (bis 3 mm, 70 kg/qm) | |
| | 100,0 % |

Inhaltsstoffe: (bezogen auf 88 % Trockensubstanz)

| EZS/100 g | 65,5 |
|---|---|
| Rohprotein | 17,6 % |
| Lysin | 0,88 % |
| Methionin | 0,26 % |
| Zystin | 0,31 % |
| Threonin | 0,64 % |
| Tryptophan | 0,23 % |
| Calcium | 0,89 % |
| Phosphor | 0,60 % |
| Natrium | 0,20 % |

Dieses Futter wurde mit Wasser im Verhältnis 1 Gewichtsteil Futter und 3 Gewichtsteile Wasser vermengt. Die Futterzuteilung der Kontrollgruppe erfolgte ad libitum. Die Tiere nahmen täglich durchschnittlich 2 kg Futter (bezogen auf 88 % Trockensubstanz) auf.

Bei der Versuchsgruppe wurde die durchschnittliche tägliche Futtermenge nach der nachfolgend aufgeführten Tabelle um ca. 7 % reduziert.

Futterzuteilung pro Tier und Tag:

| Gewicht | Futter |
|---------|--------|
| 20 kg | 3,6 Liter |
| 25 kg | 4,3 " |
| 30 kg | 5,0 " |
| 35 kg | 5,7 " |
| 40 kg | 6,5 " |
| 45 kg | 7,2 " |
| 50 kg | 7,9 " |
| 60 kg | 8,6 " |
| 70 kg | 9,3 " |
| 80 kg | 10,1 " |
| 90 kg | 10,8 " |
| 100 kg | 10,8 " |

Die Fütterung erfolgte 2 mal täglich.

Die Mastergebnisse gehen aus den folgenden Tabellen hervor:

Mastergebnisse Kontrollgruppe

| 76,5 | kg Zuwachs |
|------|-----------|
| 124 | Masttage |
| 248 | kg Futterverbrauch |

Daraus errechnet sich:

| 617 | g durchschnittliche tägliche Gewichtszunahme |
|-----|---------------------------------------------|
| 2,00 | kg durchschnittliche tägliche Futteraufnahme (88 % Trockensubstanz) |
| 1 : 3,24 | Futterverwertung |
| 2.123 | EZS/kg Zuwachs |

0150391

- 11 -

Mastergebnisse Versuchsgruppe

77,4 kg Zuwachs
117 Masttage
219 kg Futterverbrauch

Daraus errechnet sich:

662 g durchschnittliche tägliche Gewichtszunahme
1,87 kg durchschnittliche tägliche Futteraufnahme
(88 % Trockensubstanz)
1 : 2,83 Futterverwertung
1.852 EZS/kg Zuwachs

Die Futtereinsparung der Versuchsgruppe gegenüber der Kontrollgruppe, bezogen auf 1 kg Zuwachs, betrug 12,8 % (2.123 EZS ./. 1.852 EZS = 271 EZS oder 12,8 %).

Dieses Beispiel belegt, daß mit Hilfe der Reduzierung der Futtermenge gegenüber dem Stand der Technik überraschenderweise die bisher erzielten Ergebnisse trotz geringeren Energieaufwandes nicht nur erreicht, sondern übertroffen werden können. Darüberhinaus erfolgt überraschenderweise eine Reduzierung der Fettsynthese. Während nach der herrschenden Lehre die Gesamtfuttermenge nach der Formel M = J ZN errechnet und mit dieser Gesamtfuttermenge gearbeitet wird, reduziert die Erfindung die Gesamtfuttermenge um mindestens 2P. Die Formel gibt nicht die einzusetzende Gesamtfuttermenge an, sie dient vielmehr nur noch zur Orientierung und zu einer Neubemessung der Futtermenge, mit der im Rahmen der Erfindung gearbeitet wird. Es versteht sich, daß die porigen Inertstoffe zugleich als Träger für Bestandteile des Futtermittels, zum Beispiel für Fette, Öle oder Vitamine eingesetzt werden könnten, wozu eine entsprechende Mischung oder Beladung erfolgen kann. Zu besonders günstigen Ergebnissen kommt man, wenn nach dem erfindungsgemäßen Verfahren sogenannte großrahmige Tiere (großer, ausgeprägter, robuster Körperbau) gemästet werden.

Arbeitet man bei der Mast eines Mastschweines mit der definierten Größe EZS, so kann der Wert überraschenderweise niedriger angesetzt werden, als es der herrschenden Lehre entspricht. Insoweit spezifiziert sich die Lehre der Erfindung dahingehend, daß mit einer durchschnittlichen Nutzenergie von unter 2.000 EZS-Einheiten je Kilogramm Zuwachs gearbeitet wird. Wenn man auf die tägliche Energieaufnahme des Mastschweines abstellt, kennzeichnet sich die Erfindung darin, daß dem Mastschwein bei einer durchschnittlichen Zunahme von 700 Gramm/Tag eine durchschnittliche Futterenergie von weniger als 1.400 EZS/Tag zugeteilt wird. Die zugeteilte Futterenergie kann proportional zu der durchschnittlichen Gewichtszunahme, die durch die genetische Veranlagung des Mastschweines bestimmt ist, erhöht oder gesenkt werden.

Die Reduzierung der Futtermenge zusammen mit der Beimengung eines porösen Inertstoffes der hier beschriebenen Art führt zu sehr gesunden und widerstandsfähigen Tieren. Das bedeutet, daß bei der Mast nach dem erfindungsgemäßen Verfahren sogar auf Wachstumsförderer verzichtet werden kann, ohne daß die Tiere deshalb weniger schnell wachsen, als es nach dem Stand der Technik bisher möglich gewesen ist.

Ein mit dem Inertstoff Vermiculit durchgeführter Versuch ist zur Zeit der Hinterlegung dieser Anmeldung noch nicht abgeschlossen. Die bisher absehbaren Ergebnisse laufen jedoch in die gleiche Richtung wie
bei der Verwendung von Perlit.

## Patentansprüche

1. Verfahren zur Mast eines Mastschweines, wobei

   a. dem Schwein über eine vorgegebene Mastzeit nach Maßgabe des während der Mastzeit angestrebten Gesamtzuwachses Z in Kilogramm rationenweise eine normierte Schweinefuttermischung in einer Gesamtfuttermenge M in Kilogramm vorgelegt wird, die an der Formel M = J ZN orientiert wird, wobei N diejenige Nutzenergie bezeichnet, die von dem Schwein in 1 Kilogramm Zuwachs umsetzbar ist, J einen Umrechnungsfaktor bezeichnet, der von dem Gehalt an umsetzbarer Energie der Schweinefuttermischung abhängt und die Größe ZN in Kilogramm umrechnet und

   b. der Schweinefuttermischung körniger, poröser, "geblähter Perlit oder Vermiculit" oder Mischungen davon beigemischt wird und zwar in einer Menge von P Kilogramm, entsprechend 0,2 bis 6,0 Gewichtsprozent in der fertigen Schweinefuttermischung,

   dadurch gekennzeichnet, daß dem Mastschwein zur Erzielung des Gesamtzuwachses Z eine Gesamtfuttermenge vorgelegt wird, die nach Maßgabe von P auf M − 2P oder weniger reduziert ist.

2. Verfahren nach Anspruch 1., dadurch gekennzeichnet, daß dem Mastschwein je Kilogramm Zuwachs eine durchschnittliche Futterenergie von weniger als 2.000 EZS-Einheiten zugeführt wird.

3. Verfahren nach Anspruch 1. und 2., dadurch gekennzeichnet, daß dem Mastschwein bei einer durchschnittlichen Zunahme von 700 Gramm/Tag eine durchschnittliche Futterenergie von weniger als 1.400 EZS/Tag zugeteilt wird.

4. Verfahren nach Anspruch 3., dadurch gekennzeichnet, daß die zugeteilte Futterenergie proportional zu der durchschnittlichen Gewichtszunahme, die durch die genetische Veranlagung des Mastschweines bestimmt ist, erhöht oder gesenkt wird.

5. Verfahren nach Anspruch 1. bis 4., dadurch gekennzeichnet, daß dem Mastschwein 80 bis 95 % der üblichen Futtermenge zugeführt wird.